# EUROPÄISCHE PATENTANMELDUNG

(11) **EP 0 752 345 A2**
(43) Veröffentlichungstag der Anmeldung: **08.01.1997**
(21) Anmeldenummer: 96109758.1
(22) Anmeldetag: 18.06.1996
(51) Int. Cl.: B60R 21/16

(54) **Gassack für ein Rückhaltesystem in Fahrzeugen**

(30) Priorität: 03.07.1995 DE 29510759 U
(71) Anmelder: TRW Occupant Restraint Systems GmbH, 73551 Alfdorf (DE)
(72) Erfinder: Lang, Norbert, 73575 Leinzell (DE)
(74) Vertreter: Degwert, Hartmut, Dipl.-Phys.

(57) **Zusammenfassung**

Die Erfindung betrifft einen Gassack für Rückhaltesysteme in Fahrzeugen mit einer Wandung aus wenigstens zwei Gewebeteilen (22, 24), die durch eine aus mehreren parallel verlaufenden Einzelnähten (28, 30, 32) gebildete Mehrfachnaht (26; 34) miteinander verbunden sind. Die Stiche jeweils benachbarter Einzelnähte (28, 30, 32) sind in Richtung der Nahtlinie gegeneinander um einen Betrag versetzt, der kleiner als die Stichlänge ist. Die Versetzung der Stiche zweier benachbarter Einzelnähte beträgt vorzugsweise zwischen etwa einem Drittel und der Hälfte der Stichlänge.

## Beschreibung

Die Erfindung betrifft einen Gassack für Rückhaltesysteme in Fahrzeugen mit einer Wandung aus wenigstens zwei Gewebeteilen, die durch eine aus mehreren parallel verlaufenden Einzelnähten gebildete Mehrfachnaht miteinander verbunden sind.

Der Gassack eines Rückhaltesystems in Fahrzeugen wird bei einer Fahrzeugkollision innerhalb von wenigen Millisekunden aufgeblasen und dient dem Fahrzeuginsassen als Aufprallschutzkissen. Ein solcher Gassack ist meist aus mehreren Gewebeteilen gefertigt, die an ihren Außenrändern miteinander vernäht sind. Bedingt durch den Einsatz von Mehrnadel-Nähmaschinen bei der industriellen Fertigung der Gassäcke liegen die Einzelnahte der Nahtverbindungen parallel und die Stiche zweier benachbarter Einzelnähte sind jeweils so nebeneinander angeordnet, daß die kürzeste Verbindung dieser Stiche eine im wesentlichen senkrecht auf dem Nahtverlauf stehende Linie ausbildet. Die Mehrfachnaht selbst verläuft dabei parallel zum Außenrand der Gewebeteile. Eine derartige Nahtverbindung kann beim explosionsartigen Aufblasen des Gassacks leicht ausreißen.

Der Erfindung liegt daher die Aufgabe zugrunde, einen aus mehreren Gewebeteilen gefertigten Gassack bereitzustellen, bei dem die Nahtverbindung zwischen den Gewebeteilen eine erhöhte Nahtfestigkeit und Nahtflexibilität aufweist.

Diese Aufgabe wird erfindungsgemäß durch einen Gassack für Rückhaltesysteme in Fahrzeugen gelöst, der eine Wandung aus wenigstens zwei Gewebeteilen aufweist, die durch eine aus mehreren parallel verlaufenden Einzelnähten gebildete Mehrfachnaht miteinander verbunden sind, wobei die Stiche jeweils benachbarter Einzelnähte in Richtung der Nahtlinie gegeneinander um einen Betrag versetzt sind, der kleiner als die Stichlänge ist. Die Stichlänge ist dabei der Abstand zweier aufeinanderfolgender Nadeleinstiche in Nahtrichtung innerhalb einer Einzelnaht. Die Versetzung der Stiche zweier benachbarter Einzelnähte beträgt vorzugsweise zwischen etwa einem Drittel und der Hälfte der Stichlänge.

Die Herstellung einer solchen Mehrfachnaht mit in Nahtrichtung versetzten Stichen wird in einfacher Weise dadurch realisiert, daß die Nähnadeln an den zur Herstellung des erfindungsgemäßen Gassacks benutzten Mehrnadel-Nähmaschinen bei gleichbleibender Stichlänge innerhalb der Einzelnähte in Richtung des Nahtverlaufs gegeneinander versetzt werden. Bei der erfindungsgemäßen Mehrfachnaht bildet die kürzeste Verbindung der Stiche zweier benachbarter Einzelnähte dann keine im wesentlichen senkrecht auf der Nahtrichtung stehende Linie aus; die Stiche zweier benachbarter Einzelnähte, die den kürzesten Abstand voneinander aufweisen, sind dann vielmehr auf einer winklig zur Nahtrichtung einlaufenden Linie angeordnet.

Durch die erfindungsgemäße Ausbildung der Nahtverbindung zwischen den Gewebeteilen des Gassacks werden die Nahtfestigkeit und die Nahtflexibilität erhöht. Außerdem wird die Auskämmfestigkeit der Naht verbessert, da die bei einer Querbelastung der Naht infolge des Aufblasens des Gassacks auftretende Kraft an mehreren Kett- bzw. Schußfäden des Gewebes angreift.

Die Erfindung wird nun unter Bezugnahme auf die Zeichnung näher erläutert. In der Zeichnung zeigen:
- Fig. 1: eine schematische Ansicht eines aufblasbaren Gassacks für ein Rückhaltesystem in Fahrzeugen;
- Fig. 2: ein Nahtbild einer erfindungsgemäßen Nahtverbindung;
- Fig. 3: eine schematische Darstellung einer erfindungsgemäßen Nahtverbindung im Querschnitt;
- Fig. 4 und Fig. 5: weitere Nahtbilder von erfindungsgemäßen Nahtverbindungen.

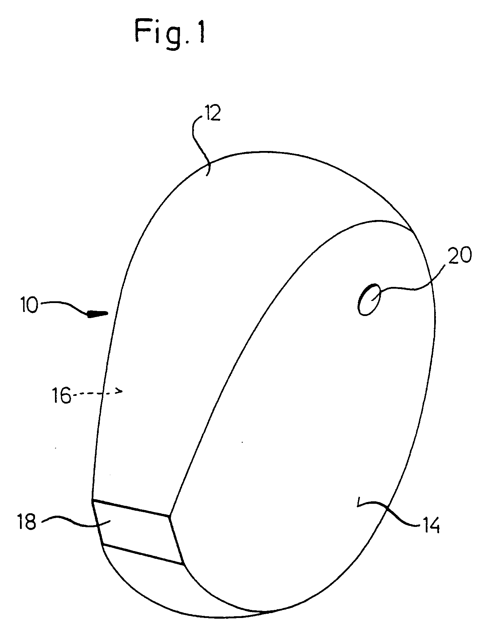

Die Wandung des in Fig. 1 dargestellten Gassacks 10 besteht aus drei an ihren Außenrändern miteinander vernähten Gewebeteilen: einem Mantelteil 12 und zwei Seitenteilen 14, 16. In dem Mantelteil 12 ist eine Anschlußöffnung 18 gebildet, an deren Berandung der Gassack 10 mit dem Gehäuse eines Gasgenerators verbunden wird. In dem Seitenteil 14 des Gassacks ist eine Entlastungsöffnung 20 vordefiniert, die ein kontrolliertes Ausströmen des Gases nach der vollständigen Entfaltung des Gassacks ermöglicht.

Der hier gezeigte zylinderförmige Gassack ist für einen Einbau auf der Beifahrerseite eines Fahrzeugs vorgesehen. Daneben sind auch ballon- oder kissenförmige Gassäcke bekannt, bei denen jeweils ein Gewebeoberteil an seinen Außenrändern mit einem Gewebeunterteil vernäht ist, die so die Wandung des Gassacks ausbilden.

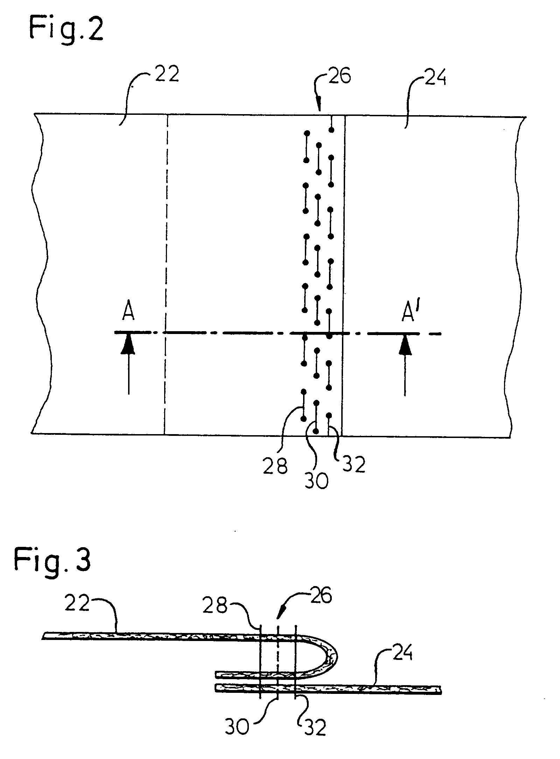

Fig. 2 zeigt eine erfindungsgemäße Ausführungsform der Verbindungsnaht zwischen den Gewebeteilen 22, 24 der Wandung eines Gassacks. Die Gewebeteile 22 und 24 können beispielsweise dem Mantelteil 12 bzw. dem Seitenteil 14 oder 16 entsprechen. Die die beiden Gewebeteile 22, 24 verbindende Mehrfachnaht 26 besteht hier aus drei parallel verlaufenden Einzelnähten 28, 30, 32. Die Stiche der jeweils benachbarten Einzelnähte 28, 30 bzw. 30 und 32 sind, bezogen auf die Nahtrichtung, gegeneinander um etwa die Hälfte der Stichlänge versetzt. Die Einzelnähte 28, 30, 32 können dabei jeweils in Kettstich- oder Steppstich-Ausführung gebildet sein. Die Stiche der Einzelnähte 28 und 32 liegen bei der hier gezeigten Ausführungsform, bezogen auf die Nahtrichtung, dagegen auf gleicher Höhe, d.h. die kürzeste Verbindung zwischen den Stichen der Einzelnähte 28 und 32 bildet eine im wesentlichen senkrecht auf der Nahtrichtung stehende Linie aus. Die Stichlänge, d.h. der Abstand zwischen zwei aufeinanderfolgenden Einstichen innerhalb einer Einzelnaht, ist in allen drei Einzelnähten gleich.

Fig. 3 zeigt schematisch einen Schnitt durch die in Fig. 2 dargestellte Nahtverbindung entlang der Linie A-A'. Das Gewebeteil 22 ist an seinem Außenrand gesäumt, d.h. nach innen umgeschlagen und an dem Außenrand des Gewebeteils 24 mittels der Mehrfachnaht 26 befestigt. Die durch einen durchgehenden Strich angedeuteten Stiche der Einzelnähte 28 und 32 liegen hier in der Schnittebene A-A', die im wesentlichen senkrecht zur Nahtrichtung verläuft. Ein Stich der Einzelnaht 30 ist hier gestrichelt dargestellt und liegt hinter der Schnittebene A-A'.

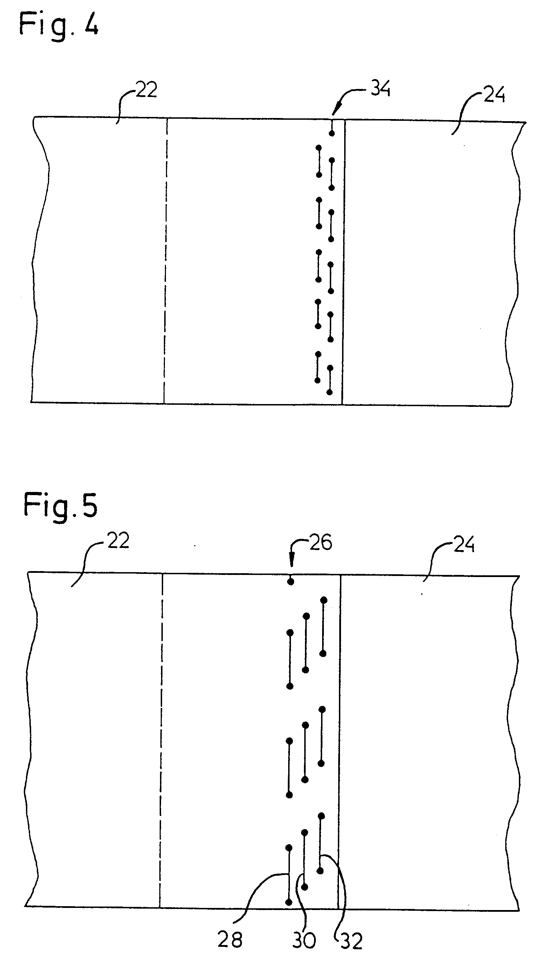

Fig. 4 zeigt die erfindungsgemäße Verbindung der Gewebeteile 22, 24 mittels einer Doppelnaht 34. Diese Doppelnaht besteht aus zwei parallel verlaufenden Einzelnähten, deren Stiche in Richtung des Nahtverlaufs gegeneinander um etwa die Hälfte der Stichlänge versetzt sind. Beide Einzelnähte weisen die gleiche Stichlänge auf. Die Doppelnaht kann in Kettstich- oder Steppstich-Ausführung gebildet sein.

Fig. 5 zeigt eine weitere erfindungsgemäße Verbindung der Gewebeteile 22 und 24. Die Mehrfachnaht 26 ist hier als voll versetzte Dreifachnaht ausgebildet, bei der die Stiche der Einzelnähte 28, 30, 32 in Richtung der Nahtlinie gegeneinander jeweils um ein Drittel der Stichlänge versetzt sind. Bezogen auf die Stiche der Einzelnaht 28 sind daher die Stiche der Einzelnaht 30 um ein Drittel und die Stiche der Einzelnaht 32 um zwei Drittel der Stichlänge in Nahtrichtung versetzt. Es versteht sich von selbst, daß die erfindungsgemäße Versetzung der Stiche in der beschriebenen Nahtverbindung nicht nur positive, sondern auch negative Werte annehmen kann.

Die erfindungsgemäße Verbindung der Gewebeteile eines Gassacks für Rückhaltesysteme in Fahrzeugen gewährleistet eine erhöhte Nahtfestigkeit und Nahtflexibilität sowie eine verbesserte Auskämmfestigkeit der Naht, da eine quer zur Nahtrichtung wirkende Kraft, wie sie vor allem beim Aufblasen des Gassacks bzw. beim Aufprall eines Fahrzeuginsassen auf den aufgeblasenen Gassack auftritt, an mehreren Kett- bzw. Schußfäden der Gewebeteile angreift.

## Patentansprüche

1. Gassack für Rückhaltesysteme in Fahrzeugen mit einer Wandung aus wenigstens zwei Gewebeteilen (22, 24), die durch eine aus mehreren parallellaufenden Einzelnähten (28, 30, 32) gebildete Mehrfachnaht (26; 34) miteinander verbunden sind, dadurch **gekennzeichnet**, daß die Stiche jeweils benachbarter Einzelnähte (28, 30, 32) in Richtung der Nahtlinie gegeneinander um einen Betrag versetzt sind, der kleiner als die Stichlänge ist.

2. Gassack nach Anspruch 1, dadurch **gekennzeichnet**, daß die Versetzung der Stiche jeweils benachbarter Einzelnähte (28, 30, 32) einem Betrag von etwa einem Drittel bis zu der Hälfte der Stichlänge entspricht.

3. Gassack nach Anspruch 1 oder 2, dadurch **gekennzeichnet**, daß die Mehrfachnaht (34) eine Doppelnaht ist und daß die Versetzung etwa der Hälfte der Stichlänge entspricht.

4. Gassack nach Anspruch 1 oder 2, dadurch **gekennzeichnet**, daß die Mehrfachnaht (26) eine Dreifachnaht ist und daß die Versetzung der Stiche der mittleren Einzelnaht (30) gegenüber den Stichen der beiden äußeren Einzelnähte (28, 32) etwa der Hälfte der Stichlänge entspricht.

5. Gassack nach Anspruch 1 oder 2, dadurch **gekennzeichnet**, daß die Mehrfachnaht (26) eine Dreifachnaht ist und daß die Versetzung der Stiche der zweiten Einzelnaht (30) gegenüber den Stichen der ersten Einzelnaht (28) etwa einem Drittel und die Versetzung der Stiche der dritten Einzelnaht (32) gegenüber den Stichen der ersten Einzelnaht (28) etwa zwei Dritteln der Stichlänge entspricht.
